(19) **Europäisches Patentamt / European Patent Office / Office européen des brevets**

(11) **EP 2 711 892 B1**

(12) **EUROPEAN PATENT SPECIFICATION**

(45) Date of publication and mention
of the grant of the patent:
**28.10.2020 Bulletin 2020/44**

(51) Int Cl.:
***G06T 3/40*** (2006.01)

(21) Application number: **13185615.5**

(22) Date of filing: **23.09.2013**

(54) **Improvements in resolving video content**

Verbesserungen bei der Auflösung von Videoinhalt

Améliorations apportées à la résolution d'un contenu vidéo

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2012 GB 201217004**

(43) Date of publication of application:
**26.03.2014 Bulletin 2014/13**

(73) Proprietor: **Vision Semantics Limited
London, Greater London E1 4NS (GB)**

(72) Inventors:
 • **Hospedales, Timothy Miguel
 London, Greater London N4 2YD (GB)**
 • **Gong, Shaogang Sean
 Pinner, Greater London HA5 3NZ (GB)**

(74) Representative: **Boult Wade Tennant LLP
Salisbury Square House
8 Salisbury Square
London EC4Y 8AP (GB)**

(56) References cited:
**US-A1- 2010 290 529**

 • JIANCHAO YANG ET AL: "Image
 Super-Resolution Via Sparse Representation",
 IEEE TRANSACTIONS ON IMAGE PROCESSING,
 IEEE SERVICE CENTER, PISCATAWAY, NJ, US,
 vol. 19, no. 11, 1 November 2010 (2010-11-01),
 pages 2861-2873, XP011328631, ISSN: 1057-7149,
 DOI: 10.1109/TIP.2010.2050625
 • SINA FARSIU ET AL: "Advances and Challenges
 in Super- Resolution", INTERNATIONAL
 JOURNAL OF IMAGING SYSTEMS AND
 TECHNOL, WILEY AND SONS, NEW YORK, US,
 vol. 4, no. 2, 1 August 2004 (2004-08-01), pages
 47-57, XP008142293, ISSN: 0899-9457
 • JOHN WRIGHT ET AL: "Sparse Representation
 for Computer Vision and Pattern Recognition",
 PROCEEDINGS OF THE IEEE, IEEE. NEW YORK,
 US, vol. 98, no. 6, 1 June 2010 (2010-06-01), pages
 1031-1044, XP011308363, ISSN: 0018-9219

EP 2 711 892 B1

Printed by Jouve, 75001 PARIS (FR)

**Description**

Field of the Invention

The present invention is related to the field of improving the quality of images. In particular it relates to visual surveillance as is frequently employed for viable identification of low-resolution CCTV video images of persons and vehicles (e.g. crime suspects), objects (e.g. detecting left luggage), or events (e.g. distinguishing a dangerous as opposed to innocuous interaction between people).

Background of the Invention

The effectiveness of visual surveillance for identification tasks is often limited by the resolution of the camera relative to the distance from and area of space being surveyed. Persons, objects and events at a distance are captured with few pixels, often providing insufficient data for identification. Super-resolution is a computational technique for upscaling image data to a higher resolution by intelligently filling in the missing pixels. However, most super-resolution methods are computationally very expensive, prohibiting their straightforward use in any real-time application such as interactive visual-surveillance.

It is desirable to provide a faster and more accurate approximation technique to speed up the super-resolution method of Yang et al [1]. Moreover, non-selective brute-force super-resolution of the entire image frame of a video stream would still be computationally prohibitive.

JIANCHAO YANG ET AL: "Image Super-Resolution Via Sparse Representation", IEEE TRANSACTIONS ON IMAGE PROCESSING, IEEE SERVICE CENTER, PISCATAWAY, NJ, US, vol. 19, no. 11, 1 November 2010 (2010-11-01), pages 2861-2873, ISSN: 1057-7149, 001: 10.1109/TIP.2010.2050625 describes a single-image super resolution based on sparse signal representation.

Therefore, there is required a method and system that overcomes these problems.

**Summary of the Invention**

Disclosed is a system for a combined automatic and interactive real-time super-resolution of image regions in video feeds for surveillance applications. The system comprises a novel design for a fast and accurate approximation of a state-of-the-art super-resolution technique for real-time performance, along with a graphical user interface comprising four key modes: (1) a procedure for detecting and super-resolving all target patches defined by a region of interest and/or multiple regions of interest (e.g. human face or body patches, or vehicle number plate image patches) in the video stream; (2) a feature to permit users to draw a bounding box around a region of interest (and/or multiple regions of interest) in a scene depicted in a video feed, for the system to super-resolve in real-time; (3) a feature to super-resolve image regions corresponding to the position of the mouse pointer, enabling users to quickly shift a focus of interest dynamically as well as zoom in and out when desired; and (4) a component for the automatic association of detected targets (e.g. face images) over multiple image frames to the same individual, as well as the determination of the quality of such detected targets and the super-resolution and subsequent presentation of those deemed of the best quality to the user for closer analysis. Together, these components provide a coherent interactive system for human users to effectively analyse surveillance video feeds on-the-fly.

According to further aspects, there are provided features for selective and interactive super-resolution that together provide a flexible system with which an human operator can interactively enhance a monitored surveillance feed to better identify persons, vehicles, objects and events. These additional features of our system may be served by the proposed super-resolution approximation method or some other methods. As computational resources and super-resolution methods continue to advance, the most effective super-resolution methods will continue to demand more computation to resolve an entire video stream than is feasible for real-time processing. Thus, the proposed intelligent methods to interactively and selectively provide super-resolution will continue to be required for super-resolution services to visual surveillance applications.

Advantageous properties and features include:

1. A system and method to assist on-the-fly human identification of persons, objects and events in surveillance video by means of real-time interactive super-resolution of selected targets of interest.
2. A faster and more accurate approximation of a state of the art sparse code super-resolution technique, which enables real-time performance without any loss of fidelity that would affect human observation.
3. A feature for detecting and super-resolving all targets of interest (e.g. faces) in a video stream.
4. A feature allowing the user to draw a bounding box around a region of interest in a video feed for the system to super-resolve in real-time.

5. A feature for super-resolution of a region of the video stream corresponding to the position of a mouse pointer.
6. A feature to interactively adjust the size of the super-resolved region and the strength of the super-resolution.
7. A feature for maintaining a gallery of the best, most-clearly identifiable by human users, images of each unique person present in a monitored space.

In accordance with a first aspect there is provided a method as described in claim 1.

The dictionaries $D_l$ and $D_h$ may be conceptually (and in some embodiments actually) low and high resolution sets of image portions or patches. However, an improvement in efficiency may be gained by using sparse code dictionaries trained from low and high resolution pairs, as this can reduce the number of entries required. In other words, $D_l$ and $D_h$ may be derived from previously acquired low and high resolution image portions, respectively. Preferably, $D_l$ and $D_h$ may be jointly trained. This is described in further detail in [1].

In accordance with a second aspect there is provided a method of displaying video comprising the steps of:

extracting one or more portions of a video stream;

improving the quality of the extracted one or more portions; and

displaying the one or more improved portions.

In accordance with a third aspect there is provided a system as described in claim 13.

As described in more detail in Appendix A, each individual window selected for super-resolution (like face/doorway) may need to be broken down into even smaller "patches", and each of those smaller patches upscaled, and then all the patches combined to get the overall super-resolved window. Stacking into matricies may occur at that level, to be resolved within one frame. (See in the Appendix A after Eq (6)). Reference [5] also provides more details on the rational and process for the use in constructing small patches from images or image portions.

The extracted one or more portions may be automatically detected objects (e.g. human faces, vehicle number plates, passenger luggage, pedestrians involved in an act) within a video stream.

A display or screen maybe used to present results to a user. Displays may provide an inlay within a low resolution image, for example. Separate windows may be included in a display. These display types, as well as others, may be used for any of the described methods.

The methods described above may be implemented as a computer program comprising program instructions to operate a computer. The computer program may be stored on a computer-readable medium.

It should be noted that any feature described above may be used with any particular aspect or embodiment of the invention.

## Brief description of the Figures

The present invention may be put into practice in a number of ways and embodiments will now be described by way of example only and with reference to the accompanying drawings, in which:

FIG. 1 shows a schematic diagram of a system for improving the quality of an image, given by way of example only;
FIG. 2 shows a schematic diagram of a display of a portion of an image with improved the quality;
FIG. 3 shows a further schematic diagram of a display of a portion of an image with improved the quality;
FIG. 4 show a further schematic diagram of a display of a portion of an image with improved the quality; and
FIG. 5 shows a schematic diagram of a system for selectively improving the quality of portions of an image.

It should be noted that the figures are illustrated for simplicity and are not necessarily drawn to scale.

## Detailed description of the preferred embodiments

Super-resolution approximation: Sparse code super-resolution methods (e.g. Yang et al [1]) super-resolve a low resolution image y into a high resolution image x by means of the following optimisation problem:

$$\alpha = \operatorname{argmin}_\alpha \lambda \|\alpha\|_0 + \|D_l \alpha - y\|_2^2$$
$$x = D_h \alpha$$

Equation 1

where $D_l$ and $D_h$ are sparse code dictionaries learned from high and low resolution training image pairs. The L0 optimisation for the sparse code $\alpha$ requires a computationally costly iterative algorithm. In this invention, we discovered that in practice L0 optimisation by iterations is not required, and a sparse code $\alpha$ can be obtained instead by L2 minimization in a single step with greatly reduced computation, and with little loss of fidelity relative to the standard approach above. Our alternative method is defined as:

$$\alpha = \operatorname{argmin}_{\alpha} \|D_l \alpha - y\|_2^2$$
$$x = D_h \alpha$$
$$x = D_h D_l^{-1} y$$

Equation 2

Sparse dictionaries $D_l$ and $D_h$ are trained in the standard way as before, offline in advance. However our new method for super-resolution is (i) significantly simpler to program and faster to compute than the standard approach, requiring only two matrix multiplications instead of an iteration over patches and iterative L0 optimisation and (ii) can be implemented on a GPU processor for further speed enhancement, due to the elimination of iterative loops.

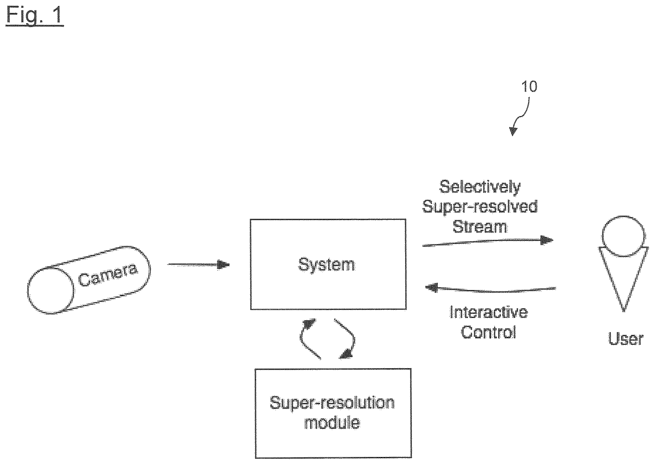

The computational cost of all super-resolution methods is proportional to the number of output pixels after super-resolution. So super-resolving a larger area, or super-resolving with more magnification is increasingly costly. The following features describe components of a system (Fig. 1) that together provide flexible interactive super-resolution services to assist the operator in surveillance monitoring tasks without the prohibitive cost of super-resolving the entire stream.

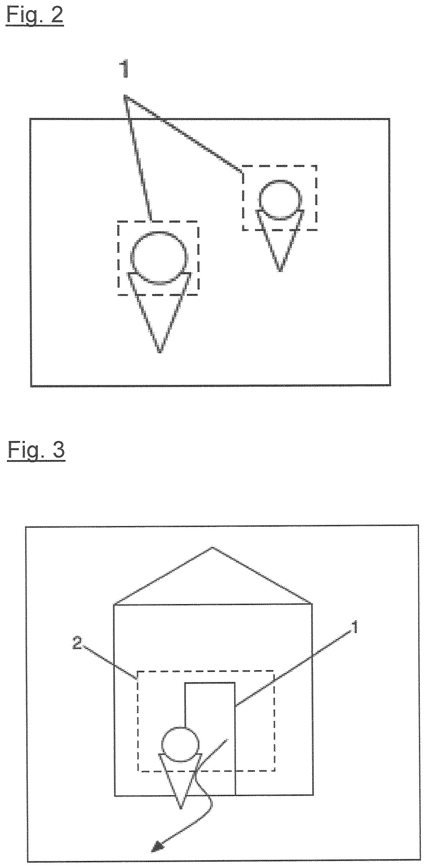

Inline target mode: This feature enables an operator to more easily identify all targets of interest (e.g. persons) in a live stream by super-resolving their face regions (Fig. 2). It works by first automatically detecting faces in the video stream using any effective face detector, followed by super-resolving only the sub-windows of each frame which contain faces (Fig. 2, node 1). Therefore, a set of the most identifiable faces for each unique person can be acquired. In this way all persons in the video stream are made more identifiable for either human observation or automated recognition, with computational cost constrained for real-time use.

Inline window mode: This feature enables an operator to interactively drag a bounding box to define a fixed region within the image plane (e.g. using mouse point-and-click) and zoom-level (e.g. using mouse-wheel) for super-resolution (Fig. 3). This is useful if physical constraints (e.g. doorway or corridor) in the area monitored by a particular camera mean that anyone entering or leaving the scene has to pass through a particular area (Fig. 3, node 1). Defining a super-resolution region over such gauntlets (Fig. 3, node 2), the operator can focus his attention here in order to identify each person entering/exiting the scene. This also enables the system to store a high-resolution face image of each person entering/exiting the scene for recording purposes.

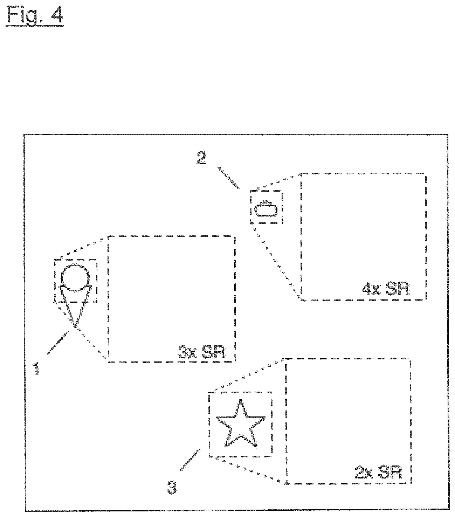

Dynamic interactive mode: When enabled, this feature automatically super-resolves a rectangle under the operator's mouse cursor. The operator may move the mouse cursor to point at any person/object/event of interest to see it super-resolved, and thus improves his ability to identify it (Fig. 4). Fig. 4 has been drawn to scale in illustrating objects of each size 3:4:6 magnified by factor 4:3:2 respectively to obtain a constant output size of 12.

This illustrates the trade off due to a maximum output size. This maximum output size may be obtained by magnifying a larger input area less, or a smaller input area more. This trade-off may be user-selectable.

The computational constraint of real-time super-resolution is a limit on the maximum number of output pixels; and hence the product of input pixels times magnification factor. This feature therefore connects the super-resolution algorithm parameters (size of input region, and magnification factor) to allow the operator to trade-off magnification factor versus input area on the fly according to the task at hand. For example: Scroll to increase/decrease the magnification, click and scroll to increase/decrease the input rectangle scale. Past the ceiling of maximum number of output pixels which can be computed in real-time, further increasing magnification or size could optionally (i) be prevented; (ii) result in decreased frame rate in the super-resolution window; (iii) to maintain real-time processing, automatically decrease the input rectangle size with increasing magnification or automatically decrease the magnification with increasing input rectangle size.

In this way the operator can balance on-the-fly super-resolution service based on different operational requirements: (i) the benefit of super-resolution enhancement of small objects versus the increasing inaccuracies inevitably introduced by synthesizing increasing numbers of pixels; (ii) the size versus magnification of the input region. For example, viewing a distant small object that is far from identifiable at native resolution with more magnification (Fig 4, node 2) than a near large object that needs less super-resolution to be made identifiable (Fig 4, node 3).

Gallery mode: The goal of visual surveillance is often to identify all persons in a scene or match them to a watch list. However, a serious drawback of performing this task by monitoring live video (whether super-resolved or not) is that in any given frame a person may be looking away from the camera, occluded, or obscured by motion blur. Indeed there are typically only be a minority of frames in which a person's face is cleanly visible, and these may easily be missed while monitoring a live stream.

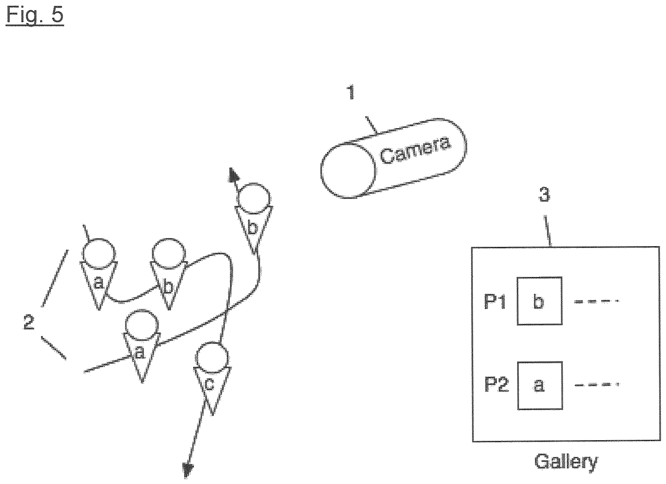

To address this, the gallery mode feature maintains in a separate window, a list of all persons in the scene, and the top-K (typically K=3) most identifiable images for each person (Fig 5, node 3). This is achieved by: (i) performing tracking and association to group person detections in each frame to the same person identity (Fig 5, node 2); (ii) evaluating the goodness of each detection for identification by checking for a positive frontal face detection using any face detector module; (iii) and ranking by a blind image quality assessment metric such as JNB [2] to prefer un-blurred and shadow-free images and finally (iv) improving identify-ability by super-resolving new entries to the top-K images for each person.

Displaying continually the top-K most identifiable images of each person in separate window allows the operator to easily monitor this window for an up-to-date overview of the most identifiable images of present people, while constraining the number of images requiring the most expensive super-resolution operation in order to maintain real-time processing. Fig. 5 shows an illustration of this setup where depending on the orientation of the camera (Fig. 5, node 1) relative to the orientation of people in the scene at each moment time (Fig 5, node 2), the gallery shows the most identifiable image of each person (Fig 5, node 3). Incorrect associations of thumbnails to person identity, or non-identifiable images (e.g., due to face detection false positive) can be dismissed by the user by clicking on those gallery entries. In response the system will promote the next best image of that person into the gallery, and in the case of a mis-association it will give feedback to the underlying tracker to update its person model and improve the association of detections.

Image cleaning feature: Because surveillance video sources are often noisy and/or low frame-rate, it may be desirable to clean the image of noise and/or motion blur before or after super-resolution. When this feature is enabled, a denoising (e.g., [3]) or blind deblurring (e.g., [4] method may be applied to the image before or after (selectable depending on application) super-resolution to further enhance the quality of the final output for the human operator's analysis.

It is important to note that each particular display, selection our output technique described may be implemented in isolation or together in any combination. Furthermore, the display techniques may use the specifically described resolution or image improvement technique or any others.

As will be appreciated by the skilled person, details of the above embodiment may be varied without departing from the scope of the present invention, as defined by the appended claims.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## References

[1] Yang et al, Image Super-Resolution via Sparse Representation, IEEE Transactions on Image Processing, 2010.

[2] Ferzli et al, A no-reference objective image sharpness metric based on the notion of Just Noticeable Blur (JNB), IEEE Transactions on Image Processing, 2009.

[3] Elad et al, Image denoisisng via sparse and redundant representations over learned dictionaries, IEEE Transactions on Image Processing, 2006.

[4] Levin et al, Efficient marginal likelihood optimization in blind deconvolution, IEEE Conference on Computer Vision and Pattern Recognition, 2011.

[5] Jia and Gong, Generalised face super-resolution, IEEE Transactions on Image Processing, 2008.

## APPENDIX

The following appendix forms part of the description:

A Real-time Dictionary based Super-Resolution of Surveillance Video Streams and Targets; Timothy M. Hospedales and Shaogang Gong - unpublished paper.

In particular, appendix A provides additional details on the enhancement algorithm. Note: $D^+$ in Appendix A is equivalent to $D^{-1}$ in the present disclosure.

**Real-time Dictionary based Super-Resolution of Surveillance Video Streams and Targets**

Timothy M. Hospedales and Shaogang Gong
Vision Semantics Ltd, UK.

Keywords: Visual surveillance, super-resolution, sparse coding

**ABSTRACT**

Real-time super-resolution within surveillance video streams is a powerful tool for security and crime prevention allowing for example, events, faces or objects such number-plates and luggage to be more accurately identified on the fly and from a distance. However, many of the state of the art approaches to super-resolution are computationally too expensive to be suitable for real-time applications within a surveillance context. We consider one particular contemporary method based on sparse coding,[1] and show how, by relaxing some model constraints, it can be sped up significantly compared to the reference implementation, and thus approach real-time performance with visually indistinct reduction in fidelity. The final computation is three orders of magnitude faster than the reference implementation. The quality of the output is maintained: PSNR of the super-resolved images compared to ground truth is not significantly different to the reference implementation, while maintaining a noticeable improvement over baseline bicubic-interpolation approach.

## 1. INTRODUCTION

The effectiveness of visual surveillance systems in practice is often limited by the resolution of the capture device relative to the area of the space being surveyed. Persons, objects and events observed at a distance from the camera are captured with few pixels, often providing insufficient detail for identification. Enhancement of image detail via super-resolution would provide a powerful capability for visual surveillance. It could enhance ability of the operator to, for example, identify people, determine if an object or event is suspicious or read a license plate.

Super-resolution has been extensively studied in the computer graphics and vision community for offline enhancement of image detail - see references for classic and recent examples[2,3] and for a survey.[4] Various ancillary directions for image enhancement have also been studied including combining multiple video frames worth of data in super-resolution,[5,6] building super-resolution models for specific objects such as faces,[7,8] and reversing noise processes such as blur[9] in the data. However, these are complementary to the core single image super-resolution task considered here.

In this paper we develop a significant speedup to a state of the art sparse coding (SC) super-resolution algorithm.[1, 8, 10, 11] The principle of sparse coding using over-complete dictionaries has emerged in recent years as a powerful approach for many image processing tasks including super-resolution,[1, 8, 10, 11] de-noising[12] and restoration.[13] However, many such of the mentioned methods require solving multiple expensive constrained optimization problems to process each incoming image, or even to process every overlapping patch of each image. This thereby limits their applicability to real-time surveillance applications.

We start by reviewing a general formulation of the super-resolution problem, the specific class of solutions entailed by sparse coding methods, and our proposed improvements in Section 2. In Section 3 we evaluate the computational complexity and super-resolution fidelity of the resulting system. Finally, in Section 4, we close with some comments about how state of the art super-resolution methods can be most effectively applied in visual surveillance systems.

## 2. METHODS

### 2.1 Super-Resolution Background

Super-resolution is the problem of inverting a downsampling image formation model. An image formation model describes the observation of a low resolution image $\mathbf{y}$ given a high resolution image $\mathbf{x}$ obtained by some downsampling process:

$$\mathbf{y} \quad = \quad SH\mathbf{x} + \epsilon, \tag{1}$$

where matrix $H : R^h \rightarrow R^h$ is a blur filter, matrix $S : R^h \rightarrow R^l$ is a downsampling matrix and $\epsilon$ represents Gaussian noise. Since the dimension of $\mathbf{y} \in R^l$ after downsampling is much less than $\mathbf{x} \in R^h$ ($h \gg l$), directly inverting this process to obtain $\mathbf{x}$ from $\mathbf{y}$ is under-constrained. That is, there are many (even an infinite number of) high resolution images $\mathbf{y}$ which correspond to a single low-resolution image $\mathbf{x}$ under the formation model Eq. (1), so a direct unique solution is impossible.

Many approaches therefore leverage a probabilistic representation of the super-resolution process:

$$p(\mathbf{x}|\mathbf{y}) \quad \propto \quad p(\mathbf{y}|\mathbf{x})p(\mathbf{x}). \qquad (2)$$

In this case, statistics from real-world data can be leveraged to alleviate the under-constrained nature of the problem: While an infinite number of potential high resolution images may correspond to each low resolution image, we can search for the high resolution image which matches the low resolution image *and is also likely to occur based on real-life image statistics.* This knowledge is learned from training data *D,* either in the form of (i) pairs {$\mathbf{x}_i$, $\mathbf{y}_i$} of high hand low resolution images, from which a direct mapping $p(\mathbf{x}|\mathbf{y})$ can be learned; or (ii) high resolution images {$x_i$} images alone, from which the prior statistics $p(\mathbf{x})$ of images can be learned to constrain Eq. (2) and permit a MAP solution. In both cases, super-resolution of $\mathbf{x}$ from $\mathbf{y}$ is then posed as searching for the *most likely* $\mathbf{x}$ **g**iven $\mathbf{y}$ and the learned prior knowledge:

$$\mathbf{x}^* \quad = \quad \underset{\mathbf{x}}{\mathrm{argmax}}\, p(\mathbf{x}|\mathbf{y}, D). \qquad (3)$$

### 2.2 Sparse Coding

The sparse coding model of[1, 10, 11] learns a direct mapping from low to high resolution via pairs $D = \{x_i, y_i\}$ of high and low resolution training images (i.e., directly modeling Eq. (3)). Specifically, a large over-complete set of *corresponding* high and low resolution patches $D_h$ and $D_l$ are sampled from {$x_i$} and {$y_i$} respectively. These patch sets are referred to as *dictionaries.* The assumption of this model is that the training set $D$ is representative of real-world images, and hence each patch in any new image can be represented by a sparse combination of patches from the dictionary. Since the high and low resolution dictionaries $D_h$ and $D_l$ correspond, such a *sparse encoding* of a low resolution image $\mathbf{y}$ automatically induces the most likely corresponding high resolution image $\mathbf{x}$. Specifically, under this approach, the image formation process is approximated as:

$$\begin{aligned} \mathbf{y} \quad &= \quad SH\mathbf{x} + \epsilon, \\ &\approx \quad SHD_h\boldsymbol{\alpha} + \epsilon, \qquad (4) \end{aligned}$$

where the high resolution image $\mathbf{x}$ is encoded in terms of a sparse representation $\alpha$, $\|\alpha\|_0 \ll h$ and a dictionary $D_h$. In this framework, super-resolution is then posed as the optimization problem of finding a sparse encoding of the low-resolution image:

$$\boldsymbol{\alpha}^* \quad = \quad \underset{\boldsymbol{\alpha}}{\arg\min} \|D_l\boldsymbol{\alpha} - \mathbf{y}\|_2^2 + \lambda \|\boldsymbol{\alpha}\|_0 , \qquad (5)$$

where the parameter $\lambda$ trades-off the objective of sparsity (L0-norm of $\alpha$) and the match of the encoding to the observed low resolution image $\mathbf{y}$. Given $\alpha^*$, the most likely high-resolution image can be constructed directly via a sparse combination of elements from the corresponding high resolution dictionary:

$$\mathbf{x}^* \quad = \quad D_h\boldsymbol{\alpha}^*. \qquad (6)$$

The process in Eq. (5)-(6) is performed for each individual patch. To complete the super-resolution process for the entire image, additional constraints may be imposed on the overall image $\mathbf{x}$ to ensure that adjacent patches are chosen to be smooth, or every overlapping patch may be processed and the results averaged to obtain the final high resolution output $\mathbf{x}^*$.[1, 10, 11] Additionally, constraints may also be applied to ensure that the resulting reconstruction matches the low-resolution image under the formation model[1, 10] (i.e., Eq. 4 may also be enforced).

### 2.3 Speedup

For sparse coding based super-resolution, we discovered a good compromise between fidelity and efficiency of online processing by relaxing the sparsity constraint during reconstruction. The dictionaries {$D_l, D_h$} are still trained by standard over-complete dictionary learning techniques.[1] However, relaxing the sparsity constraint at reconstruction time allows the code $\alpha$ to be computed directly based on L2-norm optimization of the coded dictionary elements and the low resolution input image **y.** From Eq. (5) we obtain:

$$\boldsymbol{\alpha}^* = \underset{\boldsymbol{\alpha}}{\mathrm{argmin}} \left\| D_l \boldsymbol{\alpha} - \mathbf{y} \right\|_2^2, \tag{7}$$

$$\approx D_l^+ \mathbf{y}, \tag{8}$$

$$\mathbf{x}^* = D_h \boldsymbol{\alpha}^*, \tag{9}$$

$$= D_h D_l^+ \mathbf{y}, \tag{10}$$

where $D_l^+$ is the Moore-Penrose pseudo-inverse of the low resolution dictionary. Since $D_l$ is over-complete and with more columns than rows, this procedure finds the encoding $\alpha^*$ for which $D_l\alpha = \mathbf{y}$ (of which there are many) and $\left\| \boldsymbol{\alpha} \right\|_2^2$ is minimal (of which there is one). That is, the low-resolution image is encoded in terms of the dictionary, and then the high resolution image is reconstructed using this encoding. This approximation provides an order of magnitude speedup compared to the reference implementation[1] of Eq. (5), which needs to perform iterative optimization to obtain a sparse (low L0-norm) code.

In contrast to the inefficient iteration over patches in,[1] the proposed simplification of the per-patch super-resolution procedure to vector operations also permits all the image patches to be stacked into matrix Y and hence the whole image $X$ to be efficiently super-resolved in four large matrix operations:

$$A^* \approx D_l^+ Y, \tag{11}$$
$$X^* = unstack(D_h A^*),$$

where *unstack* denotes summing out corresponding pixels in overlapping patches. This means that the procedure is simple to implement, because it requires only four calls to linear-algebra libraries. Moreover it is fast to compute due to requiring solely linear-algebra libraries which are available in highly optimized form for any given hardware platform. In practice this provides another order of magnitude speedup. Finally, by simplifying the whole image procedure into a single set of matrix operations, Eq. (11) is also amenable to efficient execution on a graphics processing unit (GPU) implementation unlike Eqs. (5)-(6),[1] which provides a final order of magnitude speedup.

Figure 1: SNR Comparison for our DirectL2 versus baselines.

Figure 2: SNR Comparison of our DirectL2 versus baselines. Left: Super-resolution SNR at each magnification. Right: Number of wins for each model out of 40 images.

## 3. EXPERIMENTS

We compare our new model (denoted DirectL2) against three baselines: a naive nearest-neighbor upscaling (denoted NN), the industry standard approach of bicubic interpolation (denoted BC), which should be considered lower baselines; as well as an upper baseline of the reference implementation of sparse coding super-resolution[1] (denoted SC). To evaluate the methods on realistic surveillance data, we collected 40 face images from a variety of surveillance data sources including the benchmark UK home office iLIDS and iLIDS MCT datasets[14] as well as datasets collected by ourselves from the london underground, and by BAA from an operationally deployed system at Heathrow airport. We evaluate 2X, 4X and 8X super-resolution conditions - corresponding to increasingly small objects and an increasingly challenging super-resolution scenario. The original images ranged from 64-256 pixels in dimension, and we down-sampled them 2-8X before super-resolving them again to attempt to reconstruct the original resolution.

### 3.1 Comparison of Super-Resolution Fidelity

In the first experiment, we compute the mean SNR between the ground truth image and the super-resolved image as shown in Figs. 1 and 2. In the simplest case of 2X super-resolution DirectL2 performs only slightly better than the BC lower baseline, and not as well as the SC upper baseline. However, in the more realistic case (a human operator is more likely to need assistance to identify a target if it is smaller to start with) of 4X super-resolution, DirectL2 performs about as well as the SC upper baseline. In the most challenging case of 8X super-resolution, DirectL2 actually outperforms the reference SC implementation.

Typical examples of super-resolution results at each scale are shown in Fig. 3. In most cases, both sparse coding methods (columns 3 and 4) are significantly sharper than the baseline bicubic method (column 2). Meanwhile, our DirectL2 method (column 3) is usually at least as sharp as the reference SC method (column 4). Most interestingly, the raw NN images at the lowest input resolution (top row of each set) would be impossible to identify, while some of the 8X super-resolved images would arguably be identifiable. Ground truth images of each person are shown at the bottom of Fig. 3.

### 3.2 Comparison of Super-Resolution Computation Cost

To compare the speed of our DirectL2 method and the reference SC implementation,[1] we recorded the computation time required to super-resolve the batch of surveillance images from the previous section with 2X, 4X and 8X magnification factors. Fig. 3.2 summarizes the computation time per image as a function of the size of the output image on a log-log scale. Color indicates the reference SC method versus DirectL2, while symbols indicate the degree of magnification.. As expected, the computation cost for each model is linear in the size of the output image. So a larger initial image with smaller magnification and a smaller initial image with larger magnification can take similar time (overlapping symbols).

Our DirectL2 method implemented in matlab, is about 2 orders of magnitude or more faster than the reference implementation throughout the range of tasks*. Crucially, for up to about $10^4$ output pixels, DirectL2 approaches real time performance (10 frames per second). Exploiting matlab GPU computation to execute Eq. (11), DirectL2-GPU obtains almost a further order of magnitude improvement in computation speed over DirectL2. Overall, DirectL2-GPU provides real time performance for up to about $10^5$ output pixels. This corresponds to about a 25x25 pixel image at 4X magnification, or a 12x12 pixel at 8X magnification. We did not execute the largest images at 8X resolution on the GPU because at this point GPU memory limitations prevent storing all the patches in memory simultaneously, and a more complicated implementation would be necessary to overcome this.

### 3.3 Practical Application Considerations

**Application Scenarios** Although we have demonstrated how to achieve dramatic speed increase over the reference implementation[1] of SC super-resolution; in practice even with an optimized implementation, real-time super-resolution of an entire video stream would require prohibitive computation in the near future. Nevertheless, one of the most typical operator tasks is to identify all persons in a scene, possibly against a prior watch-list.[15] In this section, we briefly discuss some application scenarios in which the improved super-resolution capabilities of state of the art SC algorithms could be exploited more selectively to assist in this task would requiring full-frame real-time performance.

**Faces:** To avoid costly super-resolution of the entire video stream, while supporting a typical operator task of identifying persons, a standard fast person[16] or face[17] detector could be applied to the video stream, and the super-resolution algorithm applied solely to detected body or face regions. When applied solely to face regions, the computation requirements are within the real-time capabilities of even our matlab implementation.

**Window:** Many surveilled spaces involve gauntlet situations, such as doorways or corridors which every person entering or exiting the scene must pass through. An appropriately defined super-resolution sub-window therefore provides the opportunity to enhance at least some images of all person entering or exiting a scene without requiring full-frame processing. This is illustrated in Fig. 5 for the iLIDS[14] underground and doorway monitoring datasets.

**Gallery:** Performing live super-resolution on video streams or windows thereof may not be the most effective use of the technology. As people walk through a scene, their identifiability is affected by head direction, shadows and motion blur, etc. Indeed a person may only be identifiable for only a small subset of frames within a video, which could easily be missed by an operator monitoring the live stream. An alternative approach is to apply tracking and association to maintain a list of unique identities of people in the scene,[15] and then present in a separate window a gallery of the most identifiable image(s) so far of each unique person in the scene. Identifiability is ranked by (i) positive frontal face detection,[17] and (ii) high score

*Both codes are implemented in matlab.

Figure 3: Super-resolution examples at 2X, 4X and 8X (rows) for NN, BC, DirectL2 and SC methods (cols).

Figure 4: Super-resolution computation time for a collection of images. Color indicates method SC versus DirectL2, while symbols indicate the degree of magnification.

(a) Inpainted super-resolution (4×) window in a corridor. (iLIDS underground dataset)

(b) Super-resolution (4×) window for a doorway (iLIDS doorway monitoring dataset). Right: NN vs DirectL2 super-resolution.

Figure 5: Example applications of a super-resolution window.

on a blind image quality assessment metric.[18] Finally, those images presented in the gallery (the most identifiable image so far) needs to be super-resolved. The operator can conveniently monitor this small gallery view to match against his/her watch list.

**Image Quality** Finally, we briefly mention the impact of image quality (as opposed to resolution per se) for super-resolution. We note that the super-resolution image-formation model Eq. (1) takes no account of technological noise such as compression artifacts and interlacing which are common in surveillance video. In our experiments, we observed that SR algorithms typically deal very badly with this type of noise. For practical use, video streams should ideally be de-interlaced in advanced if necessary, and only lightly compressed with a modern codec.

## 4. CONCLUSIONS

In this paper, we have analyzed a state of the art super-resolution method[1] based on sparse coding. Although this method provides significantly improved super-resolution fidelity over industry standard bicubic interpolation, it does so at massive computational cost, prohibiting its use in real-time applications such as surveillance. We discover a novel method and demonstrate its unique advantages for breaking the necessary computational barriers demanded by real-world applications. In particular, our method relaxes assumptions of the current benchmark sparse coding super-resolution method whilst retaining fidelity. It allows a significantly faster realization of the algorithm, as well as maintaining a significant margin of improvement in SNR over the bicubic baseline - especially at high magnification factors, which are exactly the situations where super-resolution would be necessary to help a surveillance operator identify a distant and/or small object. Finally, we discussed some practical application scenarios where super-resolution methods can be applied to good effect even if super-resolving a full-frame video stream is too costly for real-time computation.

**REFERENCES**

[1] Yang, J., Wright, J., Huang, T. S., and Ma, Y., "Image super-resolution via sparse representation," IEEE Transactions on Image Processing 19, 2861-2873 (2010).

[2] Freeman, W. T., Pasztor, E. C., and Carmichael, O. T., "Learning low-level vision," International Journal of Computer Vision 40, 25-47 (Oct. 2000).

[3] He, H. and Siu, W.-C., "Single image super-resolution using gaussian process regression," in [IEEE Conference on Computer Vision and Pattern Recognition], IEEE Computer Society (2011).

[4] van Ouwerkerk, J., "Image super-resolution survey," Image and Vision Computing 24(10), 1039 - 1052 (2006).

[5] Irani, M. and Peleg, S., "Improving resolution by image registration," CVGIP: Graph. Models Image Process. 53, 231-239 (Apr. 1991).

[6] Liu, C. and Sun, D., "A bayesian approach to adaptive video super resolution," in [IEEE Conference on Computer Vision and Pattern Recognition], IEEE Computer Society (2011).

[7] Jia, K. and Gong, S., "Generalized face super-resolution," IEEE Transactions on Image Processing 17(6), 873-886 (2008).

[8] Yang, J., Tang, H., Ma, Y., and Huang, T. S., "Face hallucination via sparse coding," in [International Conference on Image Processing], 1264-1267 (2008).

[9] Levin, A., Weiss, Y., Durand, F., and Freeman, W. T., "Efficient marginal likelihood optimization in blind deconvolution," in [IEEE Conference on Computer Vision and Pattern Recognition], 2657-2664 (2011).

[10] Yang, J., Wright, J., Huang, T., and Ma, Y., "Image super-resolution as sparse representation of raw image patches," in [IEEE Conference on Computer Vision and Pattern Recognition], 1-8 (2008).

[11] Zeyde, R., Elad, M., and Protter, M., "On single image scale-up using sparse-representations," in [Proceedings of the 7th international conference on Curves and Surfaces], 711-730, Springer-Verlag (2012).

[12] Elad, M. and Aharon, M., "Image denoising via sparse and redundant representations over learned dictionaries," IEEE Transactions on Image Processing 15(12), 3736-3745 (2006).

[13] Zoran, D. and Weiss, Y., "From learning models of natural image patches to whole image restoration," in [IEEE International Conference on Computer Vision], 479-486 (2011).

[14] HOSDB, "Imagery library for intelligent detection systems (i-lids)," in [IEEE Conf. on Crime and Security], (2006).

[15] Raja, Y., Gong, S., and Xiang, T., "User-assisted visual search and tracking across distributed multi-camera networks," in [Proc. SPIE 8189, 81890Q. Security and Defence Conference on Optics and Photonics for Counterterrorism and Crime Fighting.], (2011).

[16] Felzenszwalb, P. F., Girshick, R. B., McAllester, D., and Ramanan, D., "Object detection with discriminatively trained part-based models," IEEE Transactions on Pattern Analysis and Machine Intelligence 32, 1627-1645 (2010).

[17] Viola, P. and Jones, M. J., "Robust real-time face detection," International Journal of Computer Vision 57, 137-154 (2004).

[18] Ferzli, R. and Karam, L. J., "A no-reference objective image sharpness metric based on the notion of just noticeable blur (jnb)," IEEE Transactions on Image Processing 18, 717-728 (April 2009).

**Claims**

**1.** A method of improving the quality of at least a portion, *y*, of an image comprising the steps of:

approximating a sparse code, α*, using the minimisation:

$$\alpha^* = \arg\min_{\alpha} \left\| D_l \alpha - y \right\|_2^2$$

where $D_l$ is a dictionary of previously acquired low resolution image portions having a corresponding dictionary of previously acquired high resolution image portions, $D_h$, wherein each low resolution image portion within $D_l$ corresponds with a high resolution image portion within $D_h$; and

determining a high resolution image portion x* of the image to be improved from the approximated sparse code, α*, according to:

$$x^* = D_h \alpha^*$$

wherein approximating the sparse code, α*, further comprises using the approximation of:

$$\alpha^* = \arg\min_\alpha \left\| D_l \alpha - y \right\|_2^2 \approx D_l^{-1} y$$

where $D_l^{-1}$ is a pseudo inverse of $D_l$ so that x* can be found from:

$$x^* = D_h D_l^{-1} y$$

and further wherein the pseudo inverse of $D_l$ is a Moore-Penrose pseudo inverse.

2. The method of claim 1, wherein $D_l$ and $D_h$ are sparse code dictionaries.

3. The method according to any previous claim, wherein more than one portions high resolution image portions, x*, are determined from more than one low resolution image portions, y.

4. The method of claim 3 further comprising the steps of:
stacking small patches constructed from the more than one low resolution image portions, y, into a matrix Y.

5. The method of claim 4 further comprising the steps of approximating a sparse code A* for more than one low resolution image portions according to:

$$A^* \approx D_l^{-1} Y ,$$

and
determining a high resolution image X* of the image to be improved according to:

$$X^* = unstack\left(D_h A^*\right)$$

where unstack denotes summing out corresponding pixels in overlapping portions.

6. The method according to any previous claim, wherein approximating the sparse code α* is based on an L2-norm optimisation.

7. The method according to any previous claim, further comprising the steps of:

extracting one or more portions of the image to be improved; and
setting the one or more extracted portions as y.

8. The method of claim 7, wherein the extracted one or more portions are automatically detected objects within a video stream.

9. The method of claim 8 further comprising the step of separately displaying a set of the most identifiable objects within the video stream.

10. The method of claim 7, wherein the extracted one or more portions are user selected regions within a video stream.

EP 2 711 892 B1

**11.** The method of claim 7, wherein the extracted one or more portions include a portion of a video stream selected by hovering over, clicking within or otherwise selecting a display of the video stream using a computer pointing device.

**12.** The method according to any previous claim, further comprising the step of: pre or post-processing the improved portion, y, of the image using denoising or deblurring.

**13.** A system for improving the quality of at least a portion, *y*, of an image, the system comprising:

a video source arranged to supply the image; and
logic configured to:

approximate a sparse code, α\*, using the minimisation:

$$\alpha^* = \arg\min_\alpha \left\| D_l \alpha - y \right\|_2^2$$

where $D_l$ is a dictionary of previously acquired low resolution image portions having a corresponding dictionary of previously acquired high resolution image portions, $D_h$, wherein each low resolution image portion within $D_l$ corresponds with high resolution image portion within $D_h$, and
determine a high resolution image portion *x\** of the image to be improved from the approximated sparse code, α\*, according to:

$$x^* = D_h \alpha^*$$

wherein approximating the sparse code, α\*, further comprises using the approximation of:

$$\alpha^* = \arg\min_\alpha \left\| D_l \alpha - y \right\|_2^2 \approx D_l^{-1} y$$

where $D_l^{-1}$ is a pseudo inverse of $D_l$ so that *x\** can be found from:

$$x^* = D_h D_l^{-1} y$$

and further wherein the pseudo inverse of $D_l$ is a Moore-Penrose pseudo inverse.

**14.** The system of claim 13 further comprising a display configured to display the high resolution image portion *x\**.

**Patentansprüche**

**1.** Verfahren zum Verbessern der Qualität von mindestens einem Teil *y* eines Bildes mit den Schritten:

Approximieren eines sparsamen Codes α\* unter Verwendung der Minimierung:

$$\alpha^* = \arg\min_\alpha \left\| D_l \alpha - y \right\|_2^2$$

wobei $D_l$ ein Wörterbuch von zuvor aufgenommenen Bildteilen mit niedriger Auflösung ist, zu dem ein entsprechendes Wörterbuch $D_h$ von zuvor aufgenommenen Bildteilen mit hoher Auflösung existiert, wobei jeder Bildteil mit niedriger Auflösung in $D_l$ einem Bildteil mit hoher Auflösung in $D_h$ entspricht; und
Bestimmen eines Bildteils *x\** mit hoher Auflösung des zu verbessernden Bildes aus dem approximierten sparsamen Code α\* anhand:

$$x^* = D_h \alpha^*$$

wobei das Approximieren des sparsamen Codes a* ferner die Verwendung der Approximation

$$\alpha^* = \arg\min_\alpha \left\| D_l \alpha - y \right\|_2^2 \approx D_l^{-1} y$$

umfasst, wobei $D_l^{-1}$ eine Pseudoinverse von $D_l$ ist, so dass x* gefunden werden kann über:

$$x^* = D_h D_l^{-1} y$$

und wobei ferner die Pseudoinverse von $D_l$ eine Moore-Penrose-Pseudoinverse ist.

2. Verfahren nach Anspruch 1, bei dem $D_l$ und $D_h$ Wörterbücher mit sparsamem Code sind.

3. Verfahren nach einem der vorhergehenden Ansprüche, bei dem mehr als ein Teil Bildteile mit hoher Auflösung x* aus mehr als einem Bildteil mit niedriger Auflösung y bestimmt werden.

4. Verfahren nach Anspruch 3, ferner mit den Schritten:
Stapeln (Stacking) von aus den mehr als eins Bildteilen mit niedriger Auflösung y konstruierten kleinen Flicken zu einer Matrix Y.

5. Verfahren nach Anspruch 4, ferner mit den folgenden Schritten:

Approximieren eines sparsamen Codes A* für mehr als einen Bildteil mit niedriger Auflösung gemäß:

$$A^* \approx D_l^{-1} Y,$$

und
Bestimmen eines Bildes mit hoher Auflösung X* des zu verbessernden Bildes gemäß:

$$X^* = unstack\left(D_h A^*\right),$$

wobei "unstack" das Aussummieren entsprechender Pixel in überlappenden Teilen bezeichnet.

6. Verfahren nach einem der vorhergehenden Ansprüche, bei dem die Approximation des sparsamen Codes $\alpha$* auf einer L2-Norm-Optimierung basiert.

7. Verfahren nach einem beliebigen früheren Anspruch, das ferner die folgenden Schritte umfasst

Extrahieren von ein oder mehreren Teilen des zu verbessernden Bildes; und
Setzen der ein oder mehreren extrahierten Teile als y.

8. Verfahren nach Anspruch 7, bei dem die ein oder mehreren extrahierten Teile automatisch erkannte Objekte innerhalb eines Videostroms sind.

9. Verfahren nach Anspruch 8, ferner mit dem Schritt
Separates Anzeigen einer Reihe der am besten identifizierbaren Objekte innerhalb des Videostroms.

10. Verfahren nach Anspruch 7, bei dem die extrahierten ein oder mehreren Teile von einem Benutzer ausgewählte Bereiche innerhalb eines Videostroms sind.

**11.** Verfahren nach Anspruch 7, bei dem die extrahierten ein oder mehreren Teile einen Teil eines Videostroms enthalten, der durch Überfahren, Hineinklicken oder anderweitiges Auswählen einer Anzeige des Videostroms unter Verwendung eines Computer-Zeigegeräts ausgewählt wird.

**12.** Verfahren nach einem früheren Anspruch, ferner mit dem Schritt: Vor- oder Nachbearbeiten des verbesserten Teils y des Bildes unter Verwendung von Entrauschen oder Entnebeln.

**13.** System zum Verbessern der Qualität von mindestens einem Teil y eines Bildes, wobei das System umfasst:

eine Videoquelle, die eingerichtet ist, das Bild zu liefern; und
Logik, die konfiguriert ist, um:

unter Verwendung der Minimierung:

$$\alpha^* = \arg\min_\alpha \left\| D_l \alpha - y \right\|_2^2$$

einen sparsamen Code $\alpha^*$ zu approximieren, wobei $D_l$ ein Wörterbuch von zuvor aufgenommenen Bildteilen mit niedriger Auflösung ist, zu dem ein entsprechendes Wörterbuch $D_h$ von zuvor aufgenommenen Bildteilen mit hoher Auflösung existiert, wobei jeder Bildteil mit niedriger Auflösung in $D_l$ einem Bildteil mit hoher Auflösung in $D_h$ entspricht; und
aus dem approximierten sparsamen Code $\alpha^*$ anhand:

$$x^* = D_h \alpha^*$$

einen hochauflösenden Bildteil $x^*$ des zu verbessernden Bildes zu bestimmen, wobei das Approximieren des sparsamen Codes a* ferner die Verwendung der Approximation

$$\alpha^* = \arg\min_\alpha \left\| D_l \alpha - y \right\|_2^2 \approx D_l^{-1} y$$

umfasst, wobei $D_l^{-1}$ eine Pseudoinverse von $D_l$ ist, so dass $x^*$ gefunden werden kann über:

$$x^* = D_h D_l^{-1} y$$

und wobei ferner die Pseudoinverse von $D_l$ eine Moore-Penrose-Pseudoinverse ist.

**14.** System nach Anspruch 13, ferner mit einer Anzeige, die konfiguriert ist, um den hochauflösenden Bildteil x* anzuzeigen.

**Revendications**

**1.** Procédé d'amélioration de la qualité d'au moins une partie, y, d'une image comprenant les étapes de :

approximation d'un code parcimonieux, $\alpha^*$, au moyen de la minimisation :

$$\alpha^* = \arg\min_\alpha \left\| D_l \alpha - y \right\|_2^2$$

où $D_l$ est un dictionnaire de parties d'image à basse résolution précédemment acquises comportant un dictionnaire correspondant de parties d'image à haute résolution précédemment acquises, $D_h$, dans lequel chaque partie d'image à basse résolution dans $D_l$ correspond à une partie d'image à haute résolution dans $D_h$ ; et détermination d'une partie d'image à haute résolution $x^*$ de l'image à améliorer à partir de l'approximation du

code parcimonieux, $\alpha^*$, selon :

$$x^* = D_h\alpha^*$$

dans lequel l'approximation du code parcimonieux, $\alpha^*$, comprend en outre l'utilisation de l'approximation de :

$$\alpha^* = \arg\min_\alpha \left\| D_l\alpha - y \right\|_2^2 \approx D_l^{-1}y$$

où $D_l^{-1}$ est un pseudo-inverse de $D_l$ de sorte que $x^*$ peut être déterminé à partir de :

$$x^* = D_h D_l^{-1}y$$

et en outre dans lequel le pseudo-inverse de $D_l$ est un pseudo-inverse de Moore-Penrose.

2. Procédé selon la revendication 1, dans lequel $D_l$ et $D_h$ sont des dictionnaires de code parcimonieux.

3. Procédé selon l'une quelconque des revendications précédentes, dans lequel plusieurs parties d'image à haute résolution, $x^*$, sont déterminées à partir de plusieurs parties d'image à basse résolution, $y$.

4. Procédé selon la revendication 3 comprenant en outre les étapes de :
empilement de petites plaques construites à partir des plusieurs parties d'image à basse résolution, $y$, dans une matrice $Y$.

5. Procédé selon la revendication 4 comprenant en outre les étapes de
approximation d'un code parcimonieux $A^*$ pour plusieurs parties d'image à basse résolution selon :

$$A^* \approx D_l^{-1}Y,$$

et
détermination d'une image à haute résolution $X^*$ de l'image à améliorer selon :

$$X^* = unstack\ (D_hA^*)$$

où *unstack* désigne la sommation de pixels correspondants dans des parties chevauchantes.

6. Procédé selon l'une quelconque des revendications précédentes, dans lequel l'approximation du code parcimonieux $\alpha^*$ est basée sur une optimisation de norme L2.

7. Procédé selon l'une quelconque des revendications précédentes, comprenant en outre les étapes de :

extraction d'une ou plusieurs parties de l'image à améliorer ; et
la définition des une ou plusieurs parties extraites en tant que y.

8. Procédé selon la revendication 7, dans lequel les une ou plusieurs parties extraites sont des objets détectés automatiquement dans un flux vidéo.

9. Procédé selon la revendication 8 comprenant en outre l'étape d'affichage séparément un ensemble des objets les plus identifiables dans le flux vidéo.

10. Procédé selon la revendication 7, dans lequel les une ou plusieurs parties extraites sont des régions sélectionnées par l'utilisateur dans un flux vidéo.

11. Procédé selon la revendication 7, dans lequel les une ou plusieurs parties extraites comprennent une partie d'un flux vidéo sélectionné en survolant, en cliquant dans ou en sélectionnant autrement un affichage du flux vidéo au moyen d'un dispositif de pointage informatique.

12. Procédé selon l'une quelconque des revendications précédentes, comprenant en outre l'étape de : pré- ou post-traitement de la partie améliorée, *y*, de l'image au moyen d'un débruitage ou d'un défloutage.

13. Système pour améliorer la qualité d'au moins une partie, *y*, d'une image, le système comprenant :

une source vidéo agencée pour fournir l'image ; et
une logique configurée pour :

l'approximation d'un code parcimonieux, $\alpha^*$, au moyen de la minimisation :

$$\alpha^* = \arg\min_\alpha \left\| D_l\alpha - y \right\|_2^2$$

où $D_l$ est un dictionnaire de parties d'image à basse résolution précédemment acquises comportant un dictionnaire correspondant de parties d'image à haute résolution précédemment acquises, $D_h$, dans lequel chaque partie d'image à basse résolution dans $D_l$ correspond à une partie d'image à haute résolution dans $D_h$, et
la détermination d'une partie d'image à haute résolution *x** de l'image à améliorer à partir de l'approximation de code parcimonieux, $\alpha^*$, selon :

$$x^* = D_h\alpha^*$$

dans lequel l'approximation du code parcimonieux, $\alpha^*$, comprend en outre l'utilisation de l'approximation de :

$$\alpha^* = \arg\min_\alpha \left\| D_l\alpha - y \right\|_2^2 \approx D_l^{-1} y$$

où $D_l^{-1}$ est un pseudo-inverse de $D_l$ de sorte que *x** peut être déterminé à partir de :

$$x^* = D_h D_l^{-1} y$$

et en outre dans lequel le pseudo-inverse de $D_l$ est un pseudo-inverse de Moore-Penrose.

14. Système selon la revendication 13 comprenant en outre un dispositif d'affichage configuré pour afficher la partie d'image à haute résolution *x**.

Fig. 1

Fig. 2

Fig. 3

Fig. 4

EP 2 711 892 B1

Fig. 5

23

**REFERENCES CITED IN THE DESCRIPTION**

**Non-patent literature cited in the description**

- Image Super-Resolution Via Sparse Representation. **JIANCHAO YANG et al.** IEEE TRANSACTIONS ON IMAGE PROCESSING. IEEE SERVICE CENTER, 01 November 2010, vol. 19, 2861-2873
- **YANG et al.** Image Super-Resolution via Sparse Representation. *IEEE Transactions on Image Processing,* 2010
- **FERZLI et al.** A no-reference objective image sharpness metric based on the notion of Just Noticeable Blur (JNB). *IEEE Transactions on Image Processing,* 2009
- **ELAD et al.** Image denoisisng via sparse and redundant representations over learned dictionaries. *IEEE Transactions on Image Processing,* 2006
- **LEVIN et al.** Efficient marginal likelihood optimization in blind deconvolution. *IEEE Conference on Computer Vision and Pattern Recognition,* 2011
- **JIA AND GONG.** Generalised face super-resolution. *IEEE Transactions on Image Processing,* 2008
- **YANG, J. ; WRIGHT, J. ; HUANG, T. S. ; MA, Y.** Image super-resolution via sparse representation. *IEEE Transactions on Image Processing,* 2010, vol. 19, 2861-2873
- **FREEMAN, W. T. ; PASZTOR, E. C. ; CARMICHAEL, O. T.** Learning low-level vision. *International Journal of Computer Vision,* October 2000, vol. 40, 25-47
- Single image super-resolution using gaussian process regression. **HE, H. ; SIU, W.-C.** IEEE Conference on Computer Vision and Pattern Recognition. IEEE Computer Society, 2011
- **VAN OUWERKERK, J.** Image super-resolution survey. *Image and Vision Computing,* 2006, vol. 24 (10), 1039-1052
- **IRANI, M. ; PELEG, S.** Improving resolution by image registration. *CVGIP: Graph. Models Image Process.,* April 1991, vol. 53, 231-239
- A bayesian approach to adaptive video super resolution. **LIU, C. ; SUN, D.** IEEE Conference on Computer Vision and Pattern Recognition. IEEE Computer Society, 2011
- **JIA, K. ; GONG, S.** Generalized face super-resolution. *IEEE Transactions on Image Processing,* 2008, vol. 17 (6), 873-886

- **YANG, J. ; TANG, H. ; MA, Y. ; HUANG, T. S.** Face hallucination via sparse coding. *International Conference on Image Processing,* 2008, 1264-1267
- **LEVIN, A. ; WEISS, Y. ; DURAND, F. ; FREEMAN, W. T.** Efficient marginal likelihood optimization in blind deconvolution. *IEEE Conference on Computer Vision and Pattern Recognition,* 2011, 2657-2664
- **YANG, J. ; WRIGHT, J. ; HUANG, T. ; MA, Y.** Image super-resolution as sparse representation of raw image patches. *IEEE Conference on Computer Vision and Pattern Recognition,* 2008, 1-8
- On single image scale-up using sparse-representations. **ZEYDE, R. ; ELAD, M. ; PROTTER, M.** Proceedings of the 7th international conference on Curves and Surfaces. Springer-Verlag, 2012, 711-730
- **ELAD, M. ; AHARON, M.** Image denoising via sparse and redundant representations over learned dictionaries. *IEEE Transactions on Image Processing,* 2006, vol. 15 (12), 3736-3745
- **ZORAN, D. ; WEISS, Y.** From learning models of natural image patches to whole image restoration. *IEEE International Conference on Computer Vision,* 2011, 479-486
- **HOSDB.** Imagery library for intelligent detection systems (i-lids). *IEEE Conf. on Crime and Security,* 2006
- **RAJA, Y. ; GONG, S. ; XIANG, T.** User-assisted visual search and tracking across distributed multi-camera networks. *Proc. SPIE 8189, 81890Q. Security and Defence Conference on Optics and Photonics for Counter-terrorism and Crime Fighting,* 2011
- **FELZENSZWALB, P. F. ; GIRSHICK, R. B. ; MCALLESTER, D. ; RAMANAN, D.** Object detection with discriminatively trained part-based models. *IEEE Transactions on Pattern Analysis and Machine Intelligence,* 2010, vol. 32, 1627-1645
- **VIOLA, P. ; JONES, M. J.** Robust real-time face detection. *International Journal of Computer Vision,* 2004, vol. 57, 137-154
- **FERZLI, R. ; KARAM, L. J.** A no-reference objective image sharpness metric based on the notion of just noticeable blur (jnb). *IEEE Transactions on Image Processing,* April 2009, vol. 18, 717-728